# EUROPEAN PATENT APPLICATION

(11) **EP 4 841 150 A1**
(43) Date of publication of application: **18.11.2026**
(21) Application number: 26177938.3
(22) Date of filing: 11.05.2026
(51) Int. Cl.: F16P 3/08, F16P 3/14

(54) **SAFETY SYSTEM**

(30) Priority: 13.05.2025 IT 202500010754
(71) Applicant: Pizzato Elettrica S.r.l., 36063 Marostica (Vicenza) (IT)
(72) Inventor: PIZZATO, Marco, 36063 MAROSTICA (VI) (IT)
(74) Representative: Studio Torta S.p.A.

(57) **Abstract**

Safety system (10) for a machine (11) or industrial plant comprising: a barrier (13) to prevent access to a hazardous area (12) wherein the machine (11) is disposed;
a monitoring device (30) configured to perform a monitoring operation of the hazardous area (12) and to activate a safety function if persons and/or objects are detected in the hazardous area (12); and
a signalling device (40) configured to signal the status of the monitoring device.

## Description

### CROSS-REFERENCE TO RELATED APPLICATIONS

This patent application claims priority from Italian patent application no. 102025000010754 filed on May 13, 2025, the entire disclosure of which is incorporated herein by reference.

### TECHNICAL FIELD

The present invention relates, by way of non-limiting example, to a safety system for monitoring a hazardous area in the vicinity of an industrial machine and for activating a safety function if objects or persons are detected in the hazardous area.

### STATE OF THE ART

Typically, machines or industrial plants that present a hazardous condition during their operation are protected by protective barriers to prevent the presence of operators in the vicinity of the machine when the hazardous condition exists.

Furthermore, it is known that the protective barriers also comprise one or more accesses which allow operators to approach the machine when the hazardous condition does not exist, for example to perform maintenance operations or necessary interventions between one work cycle and the next.

Such accesses are normally protected by movable guards and safety switches of a known type that transmit an enabling signal for the hazardous operation of the machine when the movable guard is closed and locked to prevent access by operators. If the movable guard is opened during the operation of the machine, the safety switch ceases transmission of the enabling signal for the hazardous operation of the machine, stopping it.

However, in these cases, a risk still exists that an operator may become trapped inside the protective barrier, for example due to an accidental or unintentional closure of the movable guard, exposing them to the risk of the machine restart and thus to its hazardous operation.

To avoid this, safety devices are known that monitor the area in the vicinity of the machine inside the area protected by the protective barrier to inhibit the operation of the machine if the presence of objects or persons is detected.

A drawback of such devices is that they must necessarily be positioned inside the hazardous area to operate correctly and therefore, in most cases, are hardly visible to an operator outside the protective barriers.

This does not allow the operator to check if the monitoring device is operating and if it is operating correctly, and could cause unjustified machine stoppages necessary for the operator to check the status of the monitoring device.

For example, there is typically a delay between a restart request for the machine by an operator and the actual restart thereof. Said delay corresponds to the time required for the monitoring device to perform the monitoring operation of the hazardous area. However, the operator might interpret said delay as a problem with the machinery and this could lead them to begin searching for the problem before the expiry of the time required for the monitoring device to perform the monitoring operation, for example by stopping the machine or disconnecting it from the power supply.

The object of the present invention is therefore to provide a safety system that facilitates for the operator the checking of the status of a monitoring device for the hazardous area.

Another object of the present invention is to provide a safety system that avoids unjustified machine stoppages.

### SUMMARY OF THE INVENTION

In accordance with the aforesaid objects, according to the present invention there is provided a safety system as defined in claim 1 and preferably, but not necessarily, in any of the claims dependent thereon.

The claims describe preferred embodiments of the present invention forming an integral part of the present description.

### BRIEF DESCRIPTION OF THE DRAWINGS

Hereinafter, some embodiments of the invention will be described for a better understanding thereof by way of non-limiting example and with reference to the accompanying figures, in which:
- figure 1 is an axonometric view of a safety system in accordance with an embodiment of the present invention;
- figures 2 to 4 are schematic views of a safety system in accordance with respective embodiments of the present invention;
- figures 5 and 6 are axonometric views of a part of a safety system in accordance with respective embodiments of the present invention.

### EMBODIMENTS OF THE INVENTION

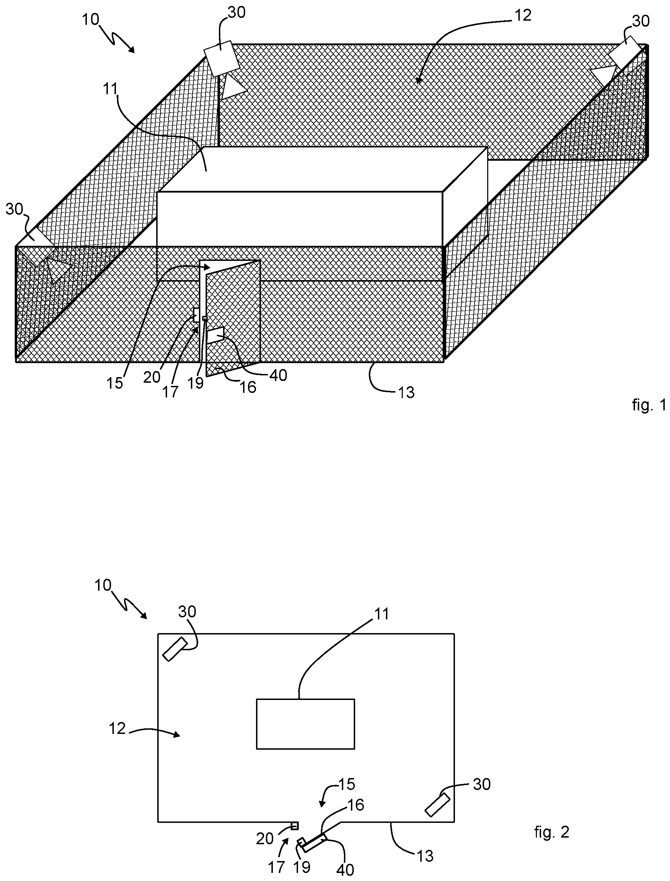

With reference to the example illustrated in figure 1, a safety system in accordance with the present invention is represented by the number 10.

The safety system 10 comprises a machine or industrial plant, hereinafter machine 11, arranged in a hazardous area 12 at least partially delimited by a protective barrier 13. During its operation, machine 11 presents hazardous conditions for an operator, such as, for example, moving parts, pressurised parts, high-temperature parts or the like.

Barrier 13 is in fact suitable for preventing the access of people or objects inside hazardous area 12 in which machine 11 is arranged.

Preferably, barrier 13 also comprises an opening 15 through which it is possible to access hazardous area 12. For example, an operator can access the hazardous 12 to perform maintenance operations on machine 11.

A movable guard 16 is associated with opening 15, for example a door or a movable hatch, which can assume a closed position wherein it does not allow access to the hazardous area 12 through the opening 15, or an open position wherein it allows access to the hazardous area 12 through the opening 15.

In some preferred embodiments, a safety interlock 17 is associated with the movable guard 16, and is configured to lock the movable guard 16 in the closed position. By way of example, the safety interlock 17 can comprise an actuator 19 fixed to the movable guard 16 and a safety switch 20 fixed to the barrier 13 or to the opening 15. Preferably, the actuator 19 and the safety switch 20 are configured to interact with each other when the movable guard 16 is in the closed position.

For example, the safety switch 20 can comprise detection means configured to detect the presence of the actuator 19 when it is in the vicinity of the safety switch 20. In this case, the safety switch 20 comprises an antenna (not shown) to excite and detect an RFID tag (not shown) arranged on the actuator 19.

However, the detection means may be of any other known type without thereby departing from the scope of the present invention.

Alternatively or in addition, the safety switch 20 may comprise locking means (not shown) configured to lock the actuator 19 in order to prevent the opening of the movable guard 16. The locking means may be of a mechanical, electromagnetic or other type without thereby departing from the scope of the present invention.

The safety switch 20 further comprises a safety unit (not shown) configured to transmit a safety signal S when the movable guard 16 is closed. Preferably, the safety unit is configured to transmit the safety signal S when the movable guard 16 is closed and the actuator 19 is locked.

The safety system 10 further comprises a monitoring device 30 configured to perform a monitoring operation of the hazardous area 12 and to activate a safety function of the machine in the event persons and/or objects are detected in the hazardous area 12. For example, monitoring device 30 is configured to enable or inhibit a hazardous operation of machine 11 based on the result of the monitoring operation.

In particular, the monitoring operation is performed to detect the presence of objects or persons inside hazardous area 12 in order to prevent the start-up or operation of the machine 11 in the event that persons or objects are trapped in the hazardous area 12.

The monitoring device 30 is configured to transmit an enabling signal E to the hazardous operation of machine 11, if the monitoring operation does not detect the presence of objects or persons in the hazardous area 12.

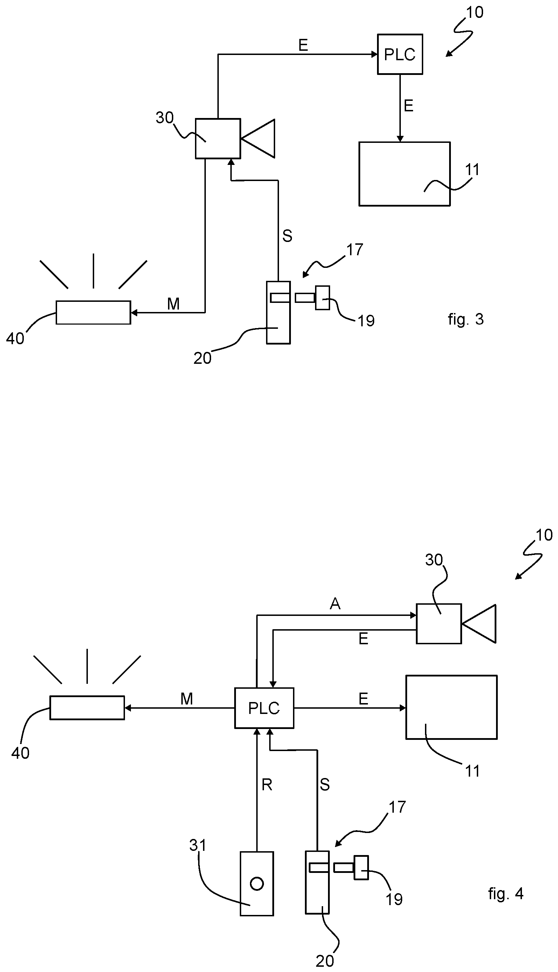

The monitoring device 30 can be connected directly to machine 11 to transmit the enabling signal E thereto. Alternatively, with reference to figures 3 and 4, monitoring device 30 can be connected to a PLC, in turn connected to machine 11, and can be configured to transmit the enabling signal E to the PLC, which in turn transmits it to machine 11.

According to the invention, the monitoring device 30 is configured to acquire remote sensing data or electromagnetic remote sensing data of the hazardous area 12, in order to detect people and/or objects within the hazardous area 12.

The term 'remote sensing data' refers to any information or data acquired using optic, optoelectronic and/or electromagnetic sensing/acquisition technologies, including, but not limited to: optical, radar, lidar, laser, optoelectronic and/or similar technologies.

For example, the monitoring device 30 may be configured to acquire image data, optoelectronic data, point clouds, radar frames and/or similar data relating to the hazardous area 12.

By way of example, the monitoring device 30 may comprise one or more image/optical acquisition devices such as cameras configured to acquire images of the hazardous area 12. In particular, the monitoring device 30 can comprise a safety camera that detects the movement of persons or objects inside the hazardous area 12, and thus their presence, by comparing two or more successive images.

Alternatively, the monitoring device 30 can comprise a radar device, a LiDAR (Light detection and Ranging) device, a ToF (Time of Flight) camera, a laser scanner, or other device suitable for detecting the presence of unexpected objects or persons inside the hazardous area 12.

Preferably, monitoring device 30 is configured to initiate the monitoring operation in response to receiving a start signal A. For example, monitoring device 30 can be connected to the safety interlock 17 to receive the safety signal S and initiate the monitoring operation after receiving the safety signal S. In this case, the start signal A of the monitoring device 30 corresponds to the safety signal S transmitted by the safety interlock 17.

The connection between monitoring device 30 and safety interlock 17 can be direct (figure 3) or indirect, for example by means of a PLC (figure 4).

Alternatively, or in addition, the safety system 10 also comprises a request device 31 configured to transmit a request signal R in response to an actuation by a user.

In preferred embodiments, the start signal A for monitoring device 30 corresponds to the simultaneous presence of the request signal R and the safety signal S.

In this case, with reference to figure 4, a PLC can be connected to the safety interlock 17 and to the request device 31 to receive the safety signal S and the request signal R and to transmit to the monitoring device the start signal A to initiate the monitoring operation after receiving the safety signal S and the request signal R.

At the end of the monitoring operation the monitoring device 30 is configured to transmit the enabling signal E to the start-up of the machine if the monitoring operation does not detect objects or persons in the hazardous area 12.

The safety system 10 further comprises a signalling device 40 configured to signal the status of the monitoring device 30.

Preferably, the signalling device 40 is configured to signal when the monitoring operation is in progress. Furthermore, the signalling device 40 may be configured to signal the outcome of the monitoring operation. Furthermore, the signalling device 40 may be configured to signal any error signals of the monitoring device 30.

In particular, the signalling device 40 is configured to emit a signal perceptible by an operator, generated on the basis of the status of the monitoring device 30. The signal may be a light signal, an acoustic signal, a vibration or any other type of signal perceptible by an operator of the machine.

For example, the signalling device 40 is configured to emit a first signal, for example a first light signal, to signal when the monitoring operation is in progress. Furthermore, in preferred embodiments, the signalling device 40 is configured to signal the outcome of the monitoring operation. For example, the signalling device 40 is configured to emit a second signal, for example a second light signal, different from the first light signal, when the monitoring device 30 enables the hazardous operation of the machine 11 and a third signal, for example a third light signal, different from the first and the second, when the monitoring device 30 inhibits the hazardous operation of the machine 11.

In an embodiment, the signalling device 40 is connected to the monitoring device 30 to receive from the latter a monitoring signal M which activates the signalling device 40 to emit the first signal. Preferably, the monitoring signal M may vary as a function of the status of the monitoring device 30, for example it may vary as a function of the outcome of the monitoring operation to activate the signalling device 40 and cause it to emit the second or third signal based on the outcome of the monitoring operation. In addition, the monitoring signal M may indicate an error of the monitoring device 30 and cause the signalling device 40 to emit a fourth signal to signal such error to an operator of the machine 11.

Alternatively, the signalling device 40 is connected to a PLC in turn connected to the monitoring device 30, to receive from said PLC the monitoring signal M, or an equivalent signal that indicates that the monitoring operation is in progress. In this case, the monitoring device 30 transmits to the PLC the monitoring signal M which indicates that the monitoring operation is in progress and the PLC in turn activates the signalling device 40 to cause it to emit the first signal as long as the monitoring signal M is present or as long as the latter indicates that the monitoring operation is in progress. Furthermore, the PLC activates the signalling device 40 to cause it to emit the second or the third signal as a function of the outcome of the monitoring operation signaled by the monitoring signal M.

It should be noted that the monitoring signal M, the safety signal S, the request signal R, the start signal A and the enabling signal E can be digital ON/OFF signals, analogue signals, or they can be signals transmitted in accordance with any industrial communication protocol such as, for example, IO-Link, IO-Link Safety, EtherCAT, ProfiNet, ProfiSafe, EtherNet, and the like, or any combination thereof, without thereby departing from the scope of the present invention. The signalling device 40 is preferably disposed in a position visible from the outside of the barrier 13.

Advantageously, in this way an operator is always informed about the status of the monitoring device 30 and can determine from the signalling device 40 whether the monitoring operation is in progress and possibly also the outcome of the same.

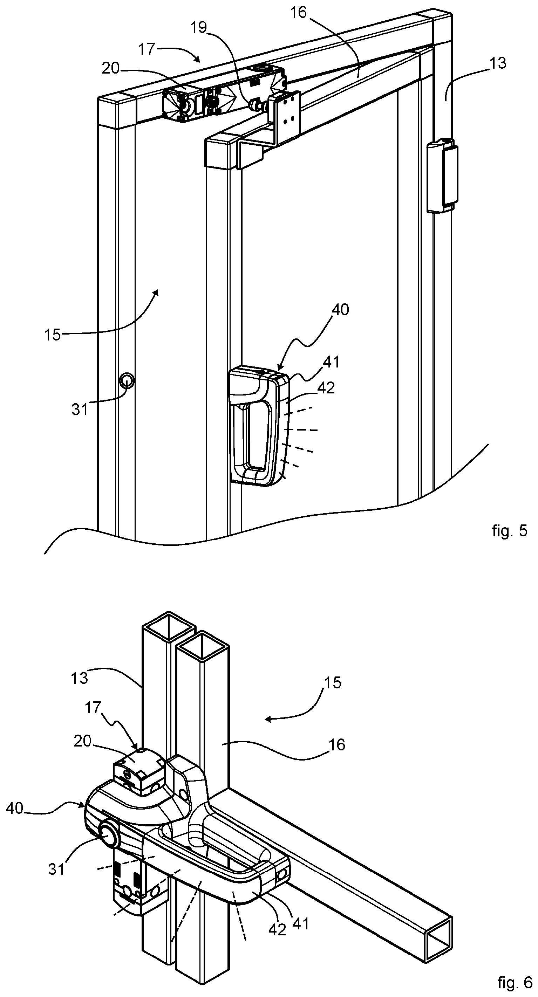

With reference to figures 5 and 6, the signalling device 40 can comprise a handle 41 that can be gripped by an operator and configured to be fixed to the movable guard 16. In this case the handle 41 comprises a luminous portion 42 configured to emit the first, the second and the third light signal.

In some embodiments, with reference to figure 6, the actuator 19 of the safety interlock 17 can be fixed to the handle 41. Furthermore, in accordance with further embodiments, also the request device 31 can be disposed directly on the handle 41. For example, the request device 31 may comprise a button incorporated in the handle 41.

In other embodiments, not shown, the signalling device 40 comprises a display configured to display a message corresponding to the status of the monitoring device 30. In this case the first, second, third and fourth signal may correspond to different messages displayed via the display of the signalling device 40.

In other embodiments, the signalling device 40 can be integrated directly in the safety interlock 17. In this case the signalling device 40 may comprise a luminous or acoustic element integrated directly in the safety interlock 17, for example in the safety switch 20.

## Claims

1. Safety system (10) for a machine (11) or industrial plant, comprising:
- a barrier (13) to prevent access to a hazardous area (12) wherein said machine (11) is disposed;
- a monitoring device (30) configured to perform a monitoring operation of said hazardous area (12) in order to detect persons and/or objects in said hazardous area (12) and to activate a safety function if persons and/or objects are detected in said hazardous area (12);
**characterised in that** it comprises:
- a signalling device (40) separate from said monitoring device (30) and configured to signal the status of said monitoring device (30).

2. Safety system (10) according to claim 1, **characterised in that** said monitoring device (30) is configured to detect the entrapment of persons or objects in said hazardous area (12) and to inhibit a hazardous operation of said machine (11) if persons or objects are detected in said hazardous area (12).

3. Safety system (10) according to claim 1 or 2, **characterised in that** said barrier (13) comprises an opening (15) protected by a movable guard (16) which can assume a closed position wherein it does not allow access to said hazardous area (12) or an open position wherein it allows access into said hazardous area (12) and to which is associated a safety interlock (17) configured to transmit a safety signal (S) when said movable guard (16) is in said closed position.

4. Safety system (10) according to claim 3, **characterised by the fact** that said monitoring device (30) is connected to said safety interlock (17) and is configured to start said monitoring operation if said safety interlock (17) transmits said safety signal (S).

5. Safety system (10) according to the preceding claims, **characterised by the fact** that said signalling device (40) is fixed to said barrier (13) or to said movable guard (16) in a position visible from the outside of said hazardous area (12).

6. Safety system (10) according to any preceding claim, **characterised in that** said signalling device (40) is configured to emit a first signal when said monitoring operation is in progress.

7. Safety system (10) according to the preceding claim 6, **characterised in that** said signalling device (40) is configured to emit a second signal if said detection device (30) allows the start of said machine (11) or a third signal different from said first signal and said second signal if said detection device (30) inhibits the start of said machine (11).

8. Safety system (10) according to claim 6 or 7, **characterised by the fact that** said signalling device (40) comprises a handle (41), that can be gripped by an operator, fixed to said movable guard (16) and in turn comprising said luminous portion (42).

9. Safety system (10) according to any one of the preceding claims 4 to 8, and wherein said monitoring device (30) is configured to start said monitoring operation in response to receiving a start signal (A), **characterised by the fact** that said start signal (A) corresponds to said safety signal (S) transmitted by said safety interlock (17).

10. Safety system (10) according to any one of claims 4 to 8, and in which said monitoring device (30) is configured to activate said monitoring operation in response to receiving a start signal (A), **characterised by the fact** it comprises a request device (31) configured to transmit a request signal (R) in response to an actuation by an operator **and by the fact that** said start signal (A) corresponds to the simultaneous presence of said request signal (R) and said safety signal (S).
